# EUROPÄISCHE PATENTSCHRIFT

(11) **EP 1 436 633 B1**
(45) Veröffentlichungstag und Bekanntmachung des Hinweises auf die Patenterteilung: **08.07.2009**
(21) Anmeldenummer: 02772342.8
(22) Anmeldetag: 25.09.2002
(51) Int. Cl.: G01P 15/08, G01P 1/02, G01D 5/347, G01P 3/50, G01P 3/49

(54) **GEKAPSELTES MESSGERÄT**
ENCASED MEASURING APPARATUS
APPAREIL DE MESURE ENCAPSULE

(30) Priorität: 08.10.2001 DE 10150935; 18.09.2002 DE 10243177
(43) Veröffentlichungstag der Anmeldung: 14.07.2004
(73) Patentinhaber: Dr. Johannes Heidenhain GmbH, 83292 Traunreut (DE)
(72) Erfinder: SCHMIDT, Ralph, 71394 Kernen i.R. (DE); SCHNEIDER, Giselher, 83278 Traunstein (DE)
(86) Internationale Anmeldenummer: PCT/EP2002/010714
(87) Internationale Veröffentlichungsnummer: WO 2003/031993

(56) Entgegenhaltungen:
- EP-A- 0 661 543
- EP-A- 1 182 767
- WO-A-01/23896
- DE-A- 2 602 619
- DE-A- 19 947 277
- FR-A- 1 419 379
- US-A- 2 090 521
- US-A- 2 460 115
- "INPUT/OUTPUT DEVICES" MACHINE DESIGN, PENTON,INC. CLEVELAND, US, Bd. 65, Nr. 13, 1. Juni 1993 (1993-06-01), Seiten 383-384,386-388-418,420,422-426, XP000454157 ISSN: 0024-9114
- ERNST, ALFONS: "Digitale Längen- und Winkelmeßtechnik; Positionsmeßsysteme für den Maschinenbau und die Elektronikindustrie" 1998 , DIE BIBLIOTHEK DER TECHNIK, VERLAG MODERNE INDUSTRIE , LANDSBERG/LECH XP002232390 165 in der Anmeldung erwähnt Seite 48, letzter Absatz -Seite 54, letzter Absatz; Abbildungen 25-27

## Beschreibung

Die Erfindung betrifft ein gekapseltes Messgerät zur Erfassung der Geschwindigkeit und/oder Beschleunigung eines rotatorisch oder linear bewegten Bauteils gemäß dem Oberbegriff des Anspruchs 1, insbesondere zur Erfassung der Position und Beschleunigung (Geschwindigkeit) eines rotatorisch oder linear bewegten Bauteils.

Aus der Literaturstelle "Digitale Längen- und Winkelmesstechnik: Positionsmesssysteme für den Maschinenbau und die Elektronikindustrie" (Verlag Moderne Industrie, 4. Aufl. 2001), Seiten 48 bis 54, sind gekapselte photoelektrische Längenmessgeräte bekannt, die aus einem Glasmaßstab und einem Abtastkopf bestehen, der eine Halbleiterlichtquelle, Kondensorlinse, Abtastplatte und Photodioden aufweist und auf einem Abtastwagen angeordnet ist, der auf dem Glasmaßstab kugelgelagert abgestützt ist. Der Maßstab und der Abtastkopf sind geschützt in einem Aluminiumgehäuse angeordnet, das einen nach unten offenen Schlitz aufweist, der mittels elastischer Dichtlippen geschlossen ist, so dass keine Fremdkörper in das Innere des Aluminiumgehäuses eindringen können. Das Gehäuse wird beispielsweise am Maschinenbett einer Werkzeugmaschine befestigt und der Werkzeugschlitten mit einem Montagefuß verbunden, der mit einem schwertartig geformten Arm durch die Dichtlippen ins Innere des Aluminiumgehäuses greift und den Abtastwagen spielfrei mitnimmt.

Aus derselben Literaturstelle sind gekapselte Winkelmessgeräte mit photoelektrisch abgetasteter Teilung auf einer Glasscheibe bekannt, die an einer Welle befestigt ist. Die Teilung und das optische System zur Abtastung der Teilung sind durch ein dichtes Gehäuse gegen Fremdkörper geschützt.

Beide Systeme dienen zur hochgenauen Erfassung der Position bzw. Winkellage linear oder rotatorisch bewegter Bauteile auch unter erschwerten Einsatzbedingungen.

Aus der DE 198 51 003 A1 ist es bekannt, für den Aufbau einer hochwertigen Positions- oder Geschwindigkeitsregelung eines rotatorischen bzw. linearen elektrischen Antriebs anstelle einer unterlagerten Stromregelung unmittelbar die Beschleunigung des bewegten Bauteils unterlagert zu regeln. Obwohl grundsätzlich die Beschleunigung eines bewegten Bauteils durch zweifaches Differenzieren eines erfassten Positionssignals gebildet werden kann, wird eine direkt gemessene Beschleunigung bevorzugt, da bei zweifachem Differenzieren des Positionssignals kleine Erfassungsfehler im Positionssignal verstärkt werden, so dass diese Methode fehlerträchtig ist. Mittels einer direkt gemessenen Beschleunigung kann jedoch eine optimale Regelungsstruktur erstellt werden, bei der als direkte Beschleunigungsmesseinrichtung ein Ferraris-Sensor eingesetzt wird, der bei rotatorischen Antrieben die Drehbeschleunigung eines Rotors und bei Linearantrieben die Linearbeschleunigung eines Läufers erfasst.

Aus der DE 44 39 233 A1 ist ein nach dem Ferraris-Prinzip arbeitender analoger Geber zur Erfassung der Drehbeschleunigung eines rotatorisch bewegten Bauteils bekannt, der einen Rotationskörper in Form einer Scheibe oder eines Hohlzylinders aus einem elektrisch leitenden, nicht ferromagnetischen Material aufweist, der von einem ortsfesten Magnetgleichfeld in der einen Hälfte in der einen und in der anderen Hälfte in der anderen Richtung durchsetzt wird. Weiterhin weist der analoge Geber ein Signalerfassungssystem mit mindestens einem Magnetflusssensor auf, der von dem mit den im Rotationskörper fließenden Wirbelströmen verketteten Magnetfluss durchsetzt wird und eine Spule aufweist, in der eine Änderung des Magnetflusses eine elektrische Spannung induziert.

Die DE 19947277 A1 beschreibt ein Positionsmesssystem mit einem integrierten, nach dem Ferraris-Prinzip arbeitenden Beschleunigungssensor. Die EP 1182767 A2 beschreibt eine Linearführung, der ein Längenmesssystem und ein nach dem Ferraris-Prinzip arbeitender Beschleunigungssensor zugeordnet ist. Die WO 01/23896 A1, die FR 1419379 und die US 2090521 beschreiben verschiedene Ferraris-Sensoren für Winkelbeschleunigungen.

Während bei der Erfassung der Bescheunigung eines rotatorisch bewegten Bauteils mittels eines nach dem Ferraris-Prinzip arbeitenden Beschleunigungssensors ein Rotationskörper als Wirbelstromkörper zur Anwendung kommt, wird zur Erfassung der Beschleunigung eines linear bewegten Bauteils ein Ferraris-Sensor eingesetzt, der aus einem ebenen Wirbelstromblech aus elektrisch leitfähigem Material und einem auf einer Seite des Wirbelstromblechs angeordneten Abtastkopf bzw. zwei auf beiden Seiten des Wirbelstromblechs angeordneten Abtastköpfen besteht. Sowohl zur Erfassung der Beschleunigung eines rotatorisch bewegten Bauteils als auch zur Erfassung der Beschleunigung eines linear bewegten Bauteils mittels eines nach dem Ferraris-Prinzip arbeitenden Beschleunigungssensors ist somit ein Wirbelstromkörper in Form eines Rotationskörpers oder Wirbelstromblechs erforderlich.

Insbesondere in Verbindung mit einem gekapselten Messgerät zur Erfassung der Position oder Winkellage eines linear oder rotatorisch bewegten Bauteils treten aber Probleme bei der Anordnung der verschiedenen Abtasteinheiten innerhalb des räumlich begrenzten Messgeräte-Gehäuses auf, wobei zusätzlich zu berücksichtigen ist, dass kugellagergestützte Führungen und Kupplungen zwischen dem mit dem bewegten Bauteil verbundenen Abtastwagen und dem Messgeräte-Gehäuse bzw. dem feststehenden Maßstab vorzusehen sind.

Ein weiteres Problem besteht darin, dass bei einem nach dem Ferraris-Prinzip arbeitenden Beschleunigungssensor der Wirbelstromkörper in nur geringen Abstand vom Abtastkopf angeordnet werden muss, so dass sowohl bei Messgeräten für linear bewegte Bauteile als auch bei Messgeräten für rotatorisch bewegte Bauteile hohe Anforderungen an die Fertigungsgenauigkeit gestellt werden.

Aufgabe der vorliegenden Erfindung ist es, ein gekapseltes Messgerät der eingangs genannten Gattung anzugeben, das eine hochpräzise Fertigung ohne Mehraufwand ermöglicht, sich durch einen minimalen Platzbedarf innerhalb des gekapselten Messgeräte-Gehäuses auszeichnet und optimal mit einem Positions- oder Winkellagen-Messsystem kombinierbar ist.

Diese Aufgabe wird erfindungsgemäß durch die Merkmale des Anspruchs 1 gelöst.

Die erfindungsgemäße Lösung stellt ein gekapseltes Messgerät zu Verfügung, das eine hochpräzise Integration eines nach dem Ferraris-Prinzip arbeitenden Beschleunigungssensors ohne zusätzlichen Fertigungsaufwand ermöglicht, einen geringen Platzbedarf für die im Messgeräte-Gehäuse anzuordnenden Abtasteinheiten aufweist und sich insbesondere für die Kombination eines linearen oder rotatorischen Positions- oder Winkelmessgerätes mit einem unmittelbar messenden Beschleunigungssensor für ein linear bewegtes oder rotatorisches Bauteil eignet.

Durch den Einsatz eines Ferraris-Sensors mit einem auf einer Seite eines Wirbelstromkörpers angeordneten Abtastkopf und durch die Nutzung einer Wand des Messgerätegehäuses als Wirbelstromkörper, so dass der Wirbelstromkörper integraler Bestandteil des Gehäuses ist, entfällt nicht nur die zusätzliche Anordnung eines Wirbelstromkörpers im Messgeräte-Gehäuse, sondern die für die Führung des Abtastwagens erforderliche hochpräzise Fertigung des Messgeräte-Gehäuses und Einhaltung eines gleichbleibenden, minimalen Abstandes zwischen der Gehäusewand und dem Abtastwagen kann gleichzeitig für die präzise Fertigung der nach dem Ferraris-Prinzip arbeitenden Abtasteinheit verwendet werden.

In einer bevorzugten Ausführungsform weist der Abtastkopf mindestens einen Magneten zur Erzeugung eines äusseren Magnetfeldes annähernd senkrecht zur Oberfläche der den Wirbelstromkörper des Ferraris-Sensors bildenden Wand des Messgeräte-Gehäuses sowie mindestens eine Detektorspule mit einer Achse zur Erfassung der Änderungen eines durch Beschleunigung des rotatorisch oder linear bewegten Bauteils veränderten, durch Wirbelströme hervorgerufenen inneren Magnetfeldes auf, wobei die Achsen der Detektorspulen annähernd senkrecht zur Oberfläche der den Wirbelstromkörper des Ferraris-Sensors bildenden Wand des Messgeräte-Gehäuses stehen und die Magnete und Detektorspulen abwechselnd in einer Richtung der zu messenden Beschleunigung nebeneinander angeordnet sind. Weiterhin können die Magnete und Detektorspulen auf einer ferromagnetischen Trägerstruktur angeordnet werden.

Vorzugsweise weist die Abtasteinheit nur einen einzelnen, auf eine als Wirbelstromkörper dienende Wand des Messgeräte-Gehäuses ausgerichteten Abtastkopf auf, so dass ein minimaler Platz innerhalb des Messgeräte-Gehäuses beansprucht wird.

Zur optimalen Erfassung der Beschleunigung des bewegten Bauteils unter Ausnutzung des Ferraris-Effektes besteht das Messgeräte-Gehäuse aus einem elektrisch leitenden und ferromagnetisch nichtleitenden Material, insbesondere aus Aluminium, Kupfer oder einer Aluminium- oder Kupferlegierung, so dass die als Wirbelstromkörper genutzte Wand des Messgerätegehäuses optimale Sensorsignale bewirkt.

Eine Ausführungsform gemäß der erfindungsgemäßen Lösung ist durch ein gekapseltes Messgerät zur Erfassung der Position und Beschleunigung (Geschwindigkeit) eines rotatorisch oder linear bewegten Bauteils gegeben, bei dem neben den Bauteilen der als Ferraris-Sensor ausgebildeten Abtasteinheit zur Erfassung der Geschwindigkeit und/oder Beschleunigung des rotatorisch oder linear bewegten Bauteils eine Positionsmesseinrichtung in dem Messgeräte-Gehäuse angeordnet ist und Teile der Positionsmesseinrichtung mit dem Messgeräte-Gehäuse verbunden sind.

Die Kombination von Positions- und Beschleunigungs-Messgerät schafft einen hohen Synergieeffekt, bei dem das Messgeräte-Gehäuse sowohl zur Kapselung und damit zum Schutz des Positions- und Beschleunigungs-Messsystems als auch zur Aufnahme von Teilen der Positionsmesseinrichtung und zur Ausbildung des Wirbelstromkörpers der nach dem Ferraris-Prinzip arbeitenden Abtasteinheit dient.

Dieser Synergieeffekt sowie die platzsparende, hochpräzise Anordnung der Bauelemente der Positions- und Beschleunigungsmesseinrichtung eignet sich vorzugsweise für ein photoelektrisches Längenmessgerät als Positionsmesseinrichtung, das aus einem Glasmaßstab, der mit dem Messgeräte-Gehäuse verbunden ist, und einem photoelektrischen Abtastkopf besteht, der auf einem am Glasmaßstab abgestützten Abtastwagen angeordnet ist.

In Verbindung mit einem derartigen gekapselten Messgerät ist der Abtastkopf des Ferraris-Sensors bevorzugt in den Abtastwagen des Längenmessgerätes integriert.

Eine vorteilhafte Weiterbildung eines kombinierten photoelektrischen Längenmessgerätes mit einem nach dem Ferraris-Prinzip arbeitenden direkt messenden Beschleunigungssensor besteht darin, dass die Positionsmesseinrichtung aus einem Auflicht- oder Durchlichtsystem besteht, das zwischen einer ersten Seite des Messgerätegehäuses und dem Abtastwagen angeordnet ist, dass der Abtastwagen einen schwertartig geformten Arm aufweist, der durch elastische, einen Spalt des Messgeräte-Gehäuses schließende Dichtlippen greift und mit einem außerhalb des Messgeräte-Gehäuses angeordneten, mit dem linear bewegten Bauteil verbundenen Montagefuß verbunden ist, und dass der Abtastkopf des Ferraris-Sensors an einer zweiten Seite des Abtastwagens angeordnet ist. Dabei ist der photoelektrische Abtastkopf an einer dem schwertartigen Arm gegenüberliegenden Seite des Abtastwagens und der Abtastkopf des Ferraris-Sensors an einer Seite des Abtastwagens angeordnet, die auf eine Seitenwand des Messgeräte-Gehäuses gerichtet ist.

Anhand eines in der Zeichnung dargestellten Ausführungsbeispieles soll der der Erfindung zugrunde liegende Gedanke näher erläutert werden. Es zeigen:
- Fig. 1 -: den schematischen Aufbau eines gekapselten Längenmessgerätes;
- Fig. 2a -: einen Schnitt durch das gekapselte Längenmessgerät gemäß Figur 1 mit integriertem Abtastkopf eines Ferraris-Sensors in einer ersten Ausführungsform;
- Fig. 2b -: einen Schnitt durch das gekapselte Längenmessgerät gemäß Figur 1 mit integriertem Abtastkopf eines Ferraris-Sensors in einer zweiten Ausführungsform;

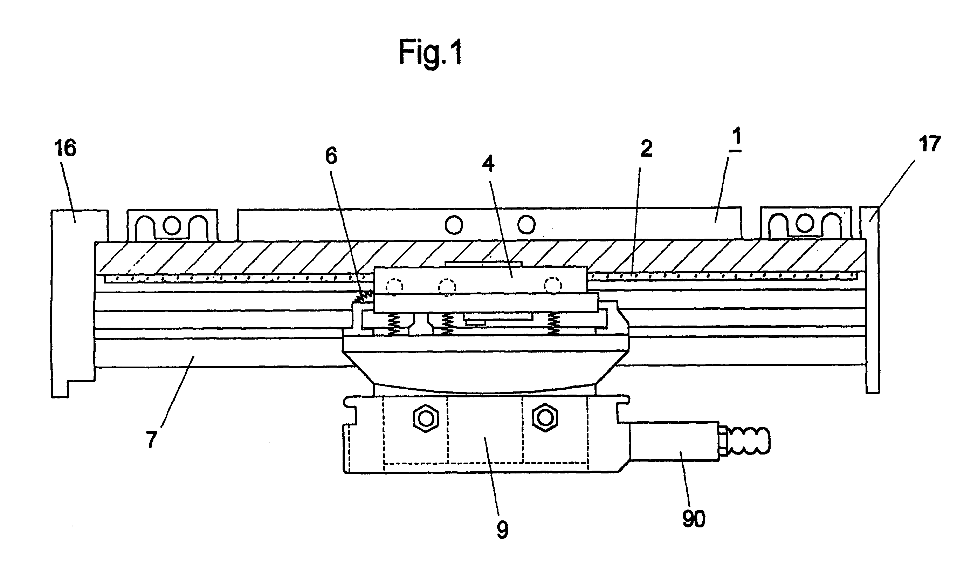

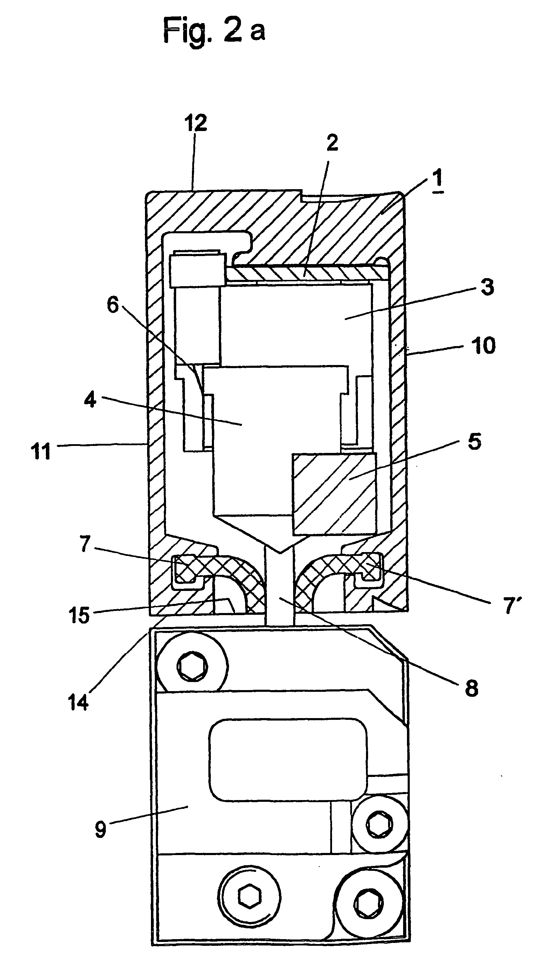

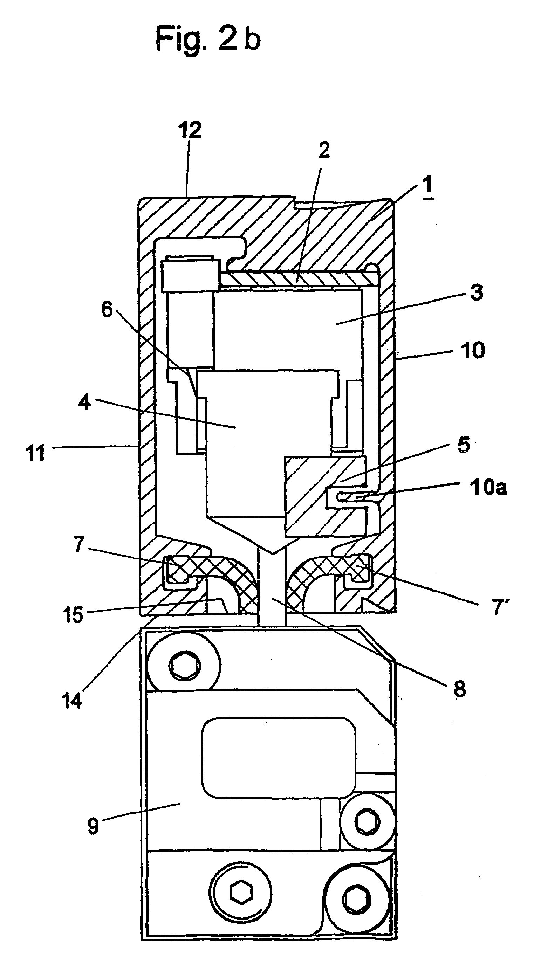

Das in den Figuren 1 und 2a, b schematisch dargestellte Messgerät dient zur Längen- oder Positionsmessung sowie zur Erfassung der Geschwindigkeit bzw. Beschleunigung eines linear bewegten Bauteils, beispielsweise zur Messung der Schlittenverschiebung an einer Werkzeugmaschine. Das Messgerät weist ein Messgeräte-Gehäuse 1 auf, dessen stirnseitige Enden durch Endabdeckungen 16, 17 abgeschlossen sind, und das sich aus einer Oberseite 12, zwei parallel zueinander verlaufenden Seitenwänden 10, 11 und einer Unterseite 14 zusammensetzt, die einen mittels Dichtlippen 7, 7' abgeschlossenen Spalt 15 aufweist. In dem Messgeräte-Gehäuse 1 ist ein Maßstab 2 angeordnet und mit der Oberseite 12 des Messgeräte-Gehäuses 1 verbunden.

Ein kugelgelagert am Maßstab 2 abgestützter Abtastwagen 4 trägt einen opto-elektronischen Abtastkopf 3, dessen Aufbau von der Art des jeweils angewandten photoelektrischen Messprinzips abhängt. Neben abbildenden Messverfahren bzw. Projektionsverfahren, die im Durchlicht- oder Auflichtverfahren betrieben werden können, kommen interferenzielle Messverfahren zur Anwendung.

Bei Anwendung eines Auflichtverfahrens besteht der Abtastkopf 3 aus einer Halbleiterlichtquelle, einer Kondensorlinse, einer Abtastplatte und Photodioden, mit denen eine auf dem Maßstab befindliche Teilung abgetastet und daraus die Weglänge des linear bewegten Bauteils bzw. dessen Position erfasst wird. Der Abtastwagen 5 ist über einen schwertartig geformten Arm 8, der durch die Dichtlippen 7, 7' greift, mit einem außerhalb des Messgeräte-Gehäuses 1 angeordneten und spielfrei mit dem Abtastwagen 5 verbundenen Montagefuß 9 verbunden, an dem ein Adapterkabel 90 befestigt ist, das mit einer Auswerte- oder Folgeelektronik verbunden ist. Eine Präzisionskupplung 6 zwischen dem Abtastwagen 4 und dem schwertartig geformten Arm 8 dient dem Ausgleich von Montagetoleranzen, da das Messgeräte-Gehäuse 1 beispielsweise mit dem Maschinenbett verbunden ist, während der über den schwertartig geformten Arm 8 mit dem Abtastwagen 4 verbundene Montagefuß 9 an einem Werkzeugschlitten befestigt ist.

Der Glasmaßstab 2 ist im Messgeräte-Gehäuse 1 elastisch befestigt, so dass die größere thermische Dehnung des Werkstoffs des Messgeräte-Gehäuses 1, das aus einem elektrisch leitfähigen, vorzugsweise aber ferromagnetisch nichtleitenden Material wie Aluminium oder Kupfer bzw. einer Aluminium- oder Kupferlegierung besteht, die Maßstabgenauigkeit nicht beeinflusst.

Zur Erfassung insbesondere der Beschleunigung eines linear bewegten Bauteils ist erfindungsgemäß ein Ferraris-Sensor vorgesehen, der sich aus einem Abtastkopf und einem Wirbelstromkörper zusammensetzt. Der Abtastkopf 5 des Ferraris-Sensors ist in den Abtastwagen 4 integriert und besteht aus in Längsrichtung abwechselnd angeordneten Magneten und Detektorspulen, die auf einer ferromagnetischen Trägerstruktur angeordnet sind.

Der Wirbelstromkörper des Ferraris-Sensors wird erfindungsgemäß durch die dem Abtastkopf 5 gegenüberstehende Seitenwand 10 des Messgeräte-Gehäuses 1 gebildet, so dass keine zusätzliche Anordnung eines vom Messgeräte-Gehäuse 1 getrennten, plattenförmigen Wirbelstromkörpers erforderlich ist. Gemäß Figur 2a werden Wirbelströme in der Seitenwand 10 einseitig vom Abtastkopf 5 erfasst. Um die Empfindlichkeit der Anordnung gegenüber Abstandsschwankungen zwischen Seitenwand 10 und Abtastkopf 5 zu reduzieren, ist gemäß Figur 2b eine der Seitenwand 10 einstückig angeformte Rippe 10a vorgesehen. Diese wird von einem geeigneten Abtastkopf 5 beidseitig abgetastet, so dass ein größerer Abstand auf der einen Seite der Rippe 10a kompensiert wird durch einen kleineren Abstand auf der anderen Seite der Rippe 10a. Das Anformen einer Rippe 10a bedingt bei der Herstellung des Gehäuses nur einen geringen Mehraufwand, wenn es sich dabei beispielsweise um ein Strangpressprofil handelt. Da das Messgeräte-Gehäuse ebenfalls aus einem elektrisch leitenden, ferromagnetisch aber nichtleitenden Material wie Kupfer oder Aluminium besteht, weist der Wirbelstromkörper des Ferraris-Sensors ideale Eigenschaften für die Erzielung optimaler Signalstärken auf. Darüber hinaus dient die für die Längsbewegung des Abtastwagens 4 erforderliche Präzision des Messgeräte-Gehäuses 1 der Einhaltung eines konstanten Spaltes zwischen dem Abtastkopf 5 des Ferraris-Sensors und dem Wirbelstromkörper 10, so dass der für eine optimale Signalerfassung erforderliche minimale Spalt gegeben ist.

Aufbau und Funktion des Ferraris-Sensors zur Erfassung der Beschleunigung bzw. Geschwindigkeit eines linear bewegten Bauteils wird nachfolgend erläutert.

Der der Seitenwand 10 des Messgeräte-Gehäuses 1 gegenüberstehende Abtastkopf 5 des Ferraris-Sensors weist drei Magnete auf, die in abwechselnder magnetischer Ausrichtung entlang der zu erfassenden Beschleunigung angeordnet sind. Da der Abstand zwischen den Magneten und dem Wirbelstromkörper 10 möglichst klein gehalten wird, durchsetzt das äußere Magnetfeld die Oberfläche der Seitenwand 10 annähernd senkrecht. Neben bzw. zwischen den Magneten sind vier Detektorspulen angeordnet, deren Spulenachsen ebenfalls senkrecht zur Oberfläche der Seitenwand 10 stehen. Damit sind in Bewegungsrichtung der zu messenden Beschleunigung abwechselnd Magnete und Detektorspulen angeordnet, wobei der der Seitenwand 10 zugewandte magnetische Pol jeweils von einem Magnet zum nächsten Magnet wechselt.

Die Magnete und die Detektorspulen sind auf einer ferromagnetischen Trägerstruktur angebracht. Durch eine Relativbewegung zwischen dem Abtastkopf 5 und der als Wirbelstromkörper dienenden Seitenwand 10 des Messgeräte-Gehäuses 1 werden Wirbelströme erzeugt. In Bewegungsrichtung hinter einem Nordpol eines der Magneten entsteht somit ein Wirbelstrom, der das äußere Magnetfeld durch ein inneres Magnetfeld gleicher Richtung ersetzt. Entsprechendes gilt für den Bereich vor einem Nordpol bzw. für die Bereiche vor und hinter einem Südpol eines der Magneten.

Vor dem ersten bzw. nach dem letzten Magneten bildet sich ein schwächerer Wirbelstrom aus als zwischen zwei Magneten, da die lokalen Änderungen des äußeren Magnetfeldes jeweils nur halb so groß sind.

Bei einer konstanten Bewegung sind auch die Wirbelströme und damit die inneren Magnetfelder konstant, so dass in den Detektorspulen keine Spannung induziert wird. Eine Beschleunigung des mit dem Abtastkopf 5 verbundenen linear bewegten Bauteils in Bewegungsrichtung bewirkt eine Änderung der Wirbelströme und damit auch der inneren Magnetfelder. Da die Detektorspulen vom inneren Magnetfeld durchsetzt sind, werden der Beschleunigung proportionale Spannungen in den Detektorspulen induziert. Durch Auswertung der Spannungen in einer Folgeelektronik kann somit die Beschleunigung des linear bewegten Bauteils bestimmt werden.

Die Detektorspulen erfassen aufgrund der speziellen Anordnung die inneren Magnetfelder besonders gut, da ihre Spulenachsen annähernd deckungsgleich mit den jeweiligen Rotationsachsen der Wirbelströme sind. Dies wird durch die Anordnung der Detektorspulen in einer Reihe mit und jeweils neben den Magneten erzielt.

Zur Abtastung einer als der Seitenwand 10 einstückig angeformte Rippe 10a ausgebildeten Wirbelstromstruktur nach Figur 2 können vorteilhaft zwei der oben beschriebenen Ferraris-Sensoren im Abtastkopf 5 zum Einsatz kommen, wobei Ober- und Unterseite der Rippe abgetastet werden.

Die Erfindung kann anstelle auf das vorstehend anhand eines gekapselten Längen- und Beschleunigungs-Messgerätes für linear bewegte Bauteile dargestellte Ausführungsbeispiel auch auf ein gekapseltes Winkel- und Winkelbeschleunigungs-Messgerät für rotatorisch bewegte Bauteile in analoger Weise angewandt werden.

## Patentansprüche

1. Gekapseltes Messgerät zur Erfassung der Lage sowie der Geschwindigkeit und/oder Beschleunigung eines linear bewegten Bauteils mit einer in einem Gehäuse (1) des gekapselten Messgerätes angeordneten Positionsmesseinrichtung (2, 3) mit einem Maßstab (2) und einem Abtastwagen (4), wobei das Gehäuse den Maßstab und den Abtastwagen (4) bis auf einen durch elastische Dichtlippen (7, 7') abgeschlossenen Spalt (15) umschießt,
**dadurch gekennzeichnet,**
**dass** der Abtastwagen (4) einen Abtastkopf (5) eines Ferraris-Sensors aufweist und dass ein Wirbelstromkörper des Ferraris-Sensors aus mindestens einem Teil einer Wand (10) des Gehäuses (1) besteht, wobei der Abtastkopf (5) so ausgebildet ist, dass er eine der Wand (10) einstückig angeformte Rippe (10a) beidseitig abtastet.

2. Messgerät nach Anspruch 1, **dadurch gekennzeichnet, dass** das Gehäuse (1) aus einem elektrisch leitenden und vorzugsweise magnetisch nichtleitenden Material, insbesondere aus Aluminium, Kupfer oder einer Aluminium- oder Kupferlegierung besteht.

3. Messgerät nach Anspruch 1 oder 2, **dadurch gekennzeichnet, dass** die Positionsmesseinrichtung (2, 3) aus einem photoelektrischen Längenmessgerät mit einem Glasmaßstab (2), der mit dem Gehäuse (1) verbunden ist, und einem photoelektrischen Abtastkopf (3) besteht, der auf dem am Glasmaßstab (2) abgestützten Abtastwagen (4) angeordnet ist.

4. Messgerät nach Anspruch 3, **dadurch gekennzeichnet, dass** der Abtastkopf (5) des Ferraris-Sensors in den Abtastwagen (4) des Längenmessgerätes integriert ist.

## Claims

1. An encased measuring device for detecting the position as well as the speed and/or the acceleration of a linearly moved component comprising a position measuring device (2, 3) arranged in a housing (1) of the encased measuring device comprising a measuring unit (2) and a probing carriage (4), wherein the housing surrounds the measuring unit and the probing carriage (4) except for a gap (15), which is closed by means of elastic sealing lips (7, 7'),
**characterized in**
**that** the probing carriage (4) encompasses a probing head (5) of a Ferraris sensor and that an eddy current body of the Ferraris sensor consists of at least a part of a wall (10) of the housing (1), wherein the probing head (5) is embodied in such a manner that it probes a rib (10a), which is integrally molded on the wall (10) in one piece, on both sides.

2. The measuring device according to claim 1, **characterized in that** the housing (1) consists of an electrically conductive and preferably magnetically non-conductive material, in particular of aluminum, copper or an aluminum or copper alloy.

3. The measuring device according to claim 1 or 2, **characterized in that** the position measuring device (2, 3) consists of a photoelectric length measuring device comprising a glass measuring unit (2), which is connected to the housing (1), and of a photoelectric probing head (3), which is arranged on the probing carriage (4), which is supported on the glass measuring unit (2).

4. The measuring device according to claim 3, **characterized in that** the probing head (5) of the Ferraris sensor is integrated into the probing carriage (4) of the length measuring device.

## Revendications

1. Appareil de mesure blindé destiné à détecter la position ainsi que la vitesse et/ou l'accélération d'un élément de construction déplacé de façon linéaire, avec un dispositif de mesure de position (2, 3) disposé dans un boîtier (1) de l'appareil de mesure blindé, avec une échelle graduée (2) et un chariot de balayage (4), le boîtier enveloppant l'échelle graduée et le chariot de balayage (4) à l'exception d'une fente (15) fermée par des lèvres d'étanchéité élastiques (7, 7'),
**caractérisé en ce que**
le chariot de balayage (4) comporte une tête de balayage (5) d'un capteur Ferraris et **en ce qu'**un corps à courant de Foucault du capteur Ferraris est constitué d'au moins une partie d'une paroi (10) du boîtier (1), la tête de balayage (5) étant conçue de manière à balayer des deux côtés une nervure (10a) formée intégralement dans la paroi (10).

2. Appareil de mesure selon la revendication 1, **caractérisé en ce que** le boîtier (1) est constitué d'un matériau électriquement conducteur et de préférence non magnétiquement conducteur.

3. Appareil de mesure selon l'une des revendications 1 ou 2, **caractérisé en ce que** le dispositif de mesure de position (2, 3) est constitué d'un appareil de mesure de longueur photoélectrique avec une échelle graduée en verre (2), qui est relié au boîtier (1), et d'une tête de balayage photoélectrique (3), qui est disposée sur le chariot de balayage (4) appuyé contre l'échelle graduée en verre (2).

4. Appareil de mesure selon la revendication 3, **caractérisé en ce que** la tête de balayage (5) du capteur Ferraris est intégrée dans le chariot de balayage (4) de l'appareil de mesure de longueur.
